# EUROPEAN PATENT APPLICATION

(11) **EP 4 796 389 A1**
(43) Date of publication of application: **26.08.2026**
(21) Application number: 25159412.3
(22) Date of filing: 21.02.2025
(51) Int. Cl.: B60R 13/00

(54) **VEHICLE LOGO EXTRACTION SYSTEM AND METHOD**

(71) Applicant: VOLKSWAGEN AG, 38440 Wolfsburg (DE)
(72) Inventor: CARRASCOSA RODRÍGUEZ, Alberto, 38440 Wolfsburg (DE); YÁÑEZ RODRIGUEZ, Carlos, 38440 Wolfsburg (DE); VIGUER GÓMEZ, Carlos, 38440 Wolfsburg (DE)

(57) **Abstract**

Vehicle logo extraction system and method. The vehicle logo extraction system comprises a vehicle logo (100) connectable to a front-end frame (400) of a vehicle and a latch element (300) configured to be operated between a locking position and a release position, wherein in the locking position the latch element (300) is configured to impede the extraction of a vehicle logo (100) from the front-end frame (400), and wherein in the release position, the latch element (300) is configured to allow the extraction of a vehicle logo (100) from the front-end frame (400), wherein the latch element (300) comprises a key block (304) connected to a latch block (303) and wherein the latch element (300) comprises a key block (304) configured to be accessible only from an interior of the vehicle's bonnet and configured to be actuated for bringing the latch element (300) from the locking position to the release position.

## Description

### Technical field

The present invention is directed to a vehicle logo extraction system that allows the vehicle logo to be released and uncoupled from a vehicle front-end frame, by reaching the vehicle logo extraction system and operating it from the inner side of the vehicle bonnet.

The present invention is further directed to a vehicle logo extraction method which allows to conveniently operate the vehicle logo extraction system to allow the vehicle logo to be extracted.

The vehicle logo extraction system and method, object of the present invention, have been specially designed for impeding or hindering unauthorized extractions (e.g. thefts) of the vehicle logo by manipulation from the exterior of the vehicle.

This invention is preferably applicable in the field of designing, manufacturing and commercializing of vehicles, especially automobiles.

### Background of the invention

It is well known that sometimes, car logos become the target of vandals or thieves who can easily disassemble the car logo from the vehicle front-end frame.

However, sometimes it is necessary to disassemble one or more parts from the front-end of the vehicle, such as the car logo or light guides, for replacement or repair, or to access areas that are hidden behind the aforementioned removable parts.

Removable parts, such as car logos or light guides, should thus be removable only at the will of the vehicle owner or an authorized technician. Unwanted extractions, thefts and vandalism must be avoided, which may endanger the integrity of the vehicle and/or its occupants.

### Summary of the invention

With the aim of providing a solution to the abovementioned problems, the present invention refers to a vehicle logo extraction system and method.

The vehicle logo extraction system, object of the present invention, comprises a vehicle logo connectable to a front-end frame of a vehicle and a latch element configured to be operated between a locking position and a release position.

The front-end frame of the vehicle is a vehicle structural element which cannot be extracted or separated from the vehicle without causing damages to other vehicle elements such as the vehicle bumper.

In the locking position, the latch element is configured to impede the extraction of the vehicle logo from the front-end frame of the vehicle by means of a latch block.

In the release position, the latch element is configured to allow the extraction of the vehicle logo from the front-end frame of the vehicle.

Thus, the latch element is an element or piece configured in such a way that, in the locking position, a distal end of the latch element (i.e. the latch block) is configured to be interposed or inserted between the vehicle logo and the front-end frame, so that the latch block impedes the relative displacement of the vehicle logo with respect to the front-end frame.

The latch element comprises a key block. The key block preferably relates to a proximal end of the latch element. The key block is connected to the latch block. The key block is configured to be accessible only from an interior of the vehicle's bonnet and is configured to be actuated for bringing the latch element from the locking position to the release position.

By means of the vehicle logo extraction system described above, it is permitted to extract the vehicle logo from the exterior of the vehicle front-end, but an unblock of the latch element is required from the interior of the vehicle's bonnet, thereby hindering any unauthorized extraction of the vehicle logo.

According to a possible embodiment, the key block may also be configured to be actuated for bringing the latch element from the release position to the locking position.

According to a preferred embodiment of the invention, the key block is configured to be actuated by means of an operating tool such as a screwdriver. Thanks to this feature, it is further hindered that any unauthorized person can extract the vehicle logo, when not carrying the appropriate operating tool.

The key block may comprise a funnel-shaped geometry configured to guide the insertion of the operating tool. This feature facilitates the insertion of the operating tool in the key block, especially in the absence of ambient light when the operator has limited visibility. Furthermore, this feature facilitates the latch element to be moved even when the operator has limited access to the lath element.

The vehicle logo preferably comprises a logo frame and a support element, wherein the support element comprises fixing means configured to retain the support element fixed to the front-end frame of the vehicle, and wherein the logo frame comprises at least one logo clamp configured to be releasably connected to the support element such that, in the locking position of the latch element, the at least one logo clamp impede the extraction of the logo frame from the support element, and in the release position of the latch element, the at least one logo clamp is configured to allow the extraction of the logo frame from the support element by means of a longitudinal displacement of the logo frame on the support element.

It is understood that the fixing means are configured to retain the support element to the vehicle front-end frame in an undetachable manner. Once the fixing means are coupled to the front-end frame of the vehicle, the support element can only be detached from said front-end frame causing damages either to the support element or to the fixing means. Therefore, the support element is a component of the vehicle logo which is configured to remain fixed to the front-end frame, being the logo frame the component of the vehicle logo which can be detached from said front-end frame.

According to a preferred embodiment of the invention, the longitudinal displacement of the logo frame on the support element which allow the extraction of the logo frame from the support element is substantially perpendicular to the extraction displacement of the logo frame from the support element. There is thus an "L" displacement required to extract the logo frame from the support element: a first longitudinal displacement which releases the logo clamps form the support element, and a second longitudinal displacement or extraction displacement, which moves the logo frame away from the support element.

According to the preferred embodiment of the invention, the support element of the vehicle logo comprises a housing within which the latch element is hosted, wherein the housing comprises a plurality of abutment surfaces configured to restrict the operation movement of the latch element, at least between the release position and the locking position. It is understood that said plurality of abutment surfaces are configured to prevent a free movement of the latch element inside the housing.

Preferably, the latch element is configured to rotate within the housing for being operated between the locking position and the release position, wherein the housing comprises first abutment surfaces configured to restrict the direction of the rotation movement of the latch block when operating the latch element from the locking position up to the release position. The contact between the latch block and the first abutment surface allows the rotation movement of the latch element only in one direction.

Furthermore, the housing preferably comprises second abutment surfaces configured to restrict the rotation movement of the latch block when operating the latch element from the locking position up to an intermediate position. The contact between the latch block and the second abutment surface restricts that the latch element can be further rotated up to the release position, defining the intermediate position.

According to the preferred embodiment of the invention, the vehicle logo extraction system comprises a spring element configured to cooperate with the latch element and the housing, such that for bringing the latch element from the intermediate position to the release position, the spring element must be compressed by exerting a pressure upon the key block, such that the latch element can be slidably displaced in relation to the housing avoiding the latch block the second abutment surfaces such that the latch element can be further rotated up to the release position. It is understood that a combination of movements is required to bring the latch element to the release position, meaning a combination of a rotation movement and a longitudinal displacement. Unless such two movements are operated simultaneously, the latch element would remain in the intermediate position and the vehicle logo would not be released from the front-end frame.

According to a preferred embodiment of the invention, the logo frame comprises a stop element configured to contact the latch block and limit the longitudinal displacement of the logo frame on the support element, being the latch element in the locking position. The logo clamp being connected to the support element without possibility of being released from the support element.

Furthermore, according to a preferred embodiment of the invention, the stop element is further configured to contact the latch block and limit the displacement of the logo frame on the support element, being the latch element in the intermediate position. The logo clamp being connected to the support element without possibility of being released from the support element.

The key block may be connected to the latch block through a latch shaft, wherein the latch shaft comprises at least one lateral flange configured to abut against at least one abutment surface in the release position and/or in the locking position and/or in the intermediate position.

As already introduced, the present invention further relates to a method for extracting a vehicle logo, more precisely, for extracting a vehicle logo from a vehicle front-end frame.

The method for extracting a vehicle logo, according to the present invention, comprises utilizing the vehicle logo extraction system as described above.

Furthermore, the method for extracting a vehicle logo, according to the present invention, comprises actuating the key block for bringing the latch element from the locking position to the release position.

According to a preferred embodiment of the invention, the method comprises actuating the key block by means of an operating tool such as a screwdriver.

According to the preferred embodiment of the method, actuating the key block comprises exerting a rotation movement upon the key block.

According to a preferred embodiment of the invention, the method comprises longitudinally displacing the logo frame on the support element, being the at least one logo clamp released from the support element. Once the at least one logo clamp is disengaged from the corresponding slot or the support element, the logo frame can be extracted from the support element. There is an "L" displacement being performed to extract the logo frame from the support element, being such two displacements substantially perpendicular to each other.

Furthermore, according to a preferred embodiment of the invention, the method for extracting a vehicle logo comprises:
- rotating the key block from the locking position of the latch element up to an intermediate position of the latch element, wherein such intermediate position could be defined by a contact of the latch block with the second abutment surface of the housing;
- exerting a pressure upon the key block in the rotation axis direction, such that the latch block could be shifted away from the second abutment surface of the housing;
- further rotating the key block, such that the latch block could be shifted away from the stop element of the logo frame, and;
- extracting the vehicle logo from the front-end frame of the vehicle, by means, according to some embodiments, of an "L" displacement being performed to the logo frame with respect to the support element.

The method allows an easy extraction of the vehicle logo from the front-end frame and prevents unauthorized extractions (e.g. thefts) of the vehicle logo.

### Brief description of the drawings

As a means for better understanding at least one embodiment of the present invention, the following set of drawings is introduced by way of schematic illustration and in a non-limitative manner.
Figure 1: Shows a schematic front view of a vehicle front-end frame, where the vehicle logo has been extracted.
Figure 2: Shows a schematic section view of a vehicle front-end frame with the vehicle logo extraction system of the present invention, according to a possible embodiment thereof.
Figure 3: Shows a schematic rear view of the vehicle logo extraction system of the present invention, according to a possible embodiment thereof.
Figure 4: Shows a schematic section view of the latch element disposed in the housing of the support element of the present invention, according to a possible embodiment thereof.
Figure 5: Shows a rear view of the latch element of the vehicle logo extraction system of Figure 4, in the locking position.
Figure 6: Shows a schematic perspective rear view of the latch element of the vehicle logo extraction system in the locking position.
Figure 7: Shows a schematic perspective view of the latch element of the vehicle logo extraction system, according to a first step in the extraction sequence.
Figure 8: Shows a schematic perspective view of the latch element of the vehicle logo extraction system, according to a second step in the extraction sequence.
Figure 9: Shows a schematic perspective view of the latch element of the vehicle logo extraction system, according to a third step in the extraction sequence.

### Detailed description

The present invention, as already introduced, refers to a vehicle logo extraction system and method.

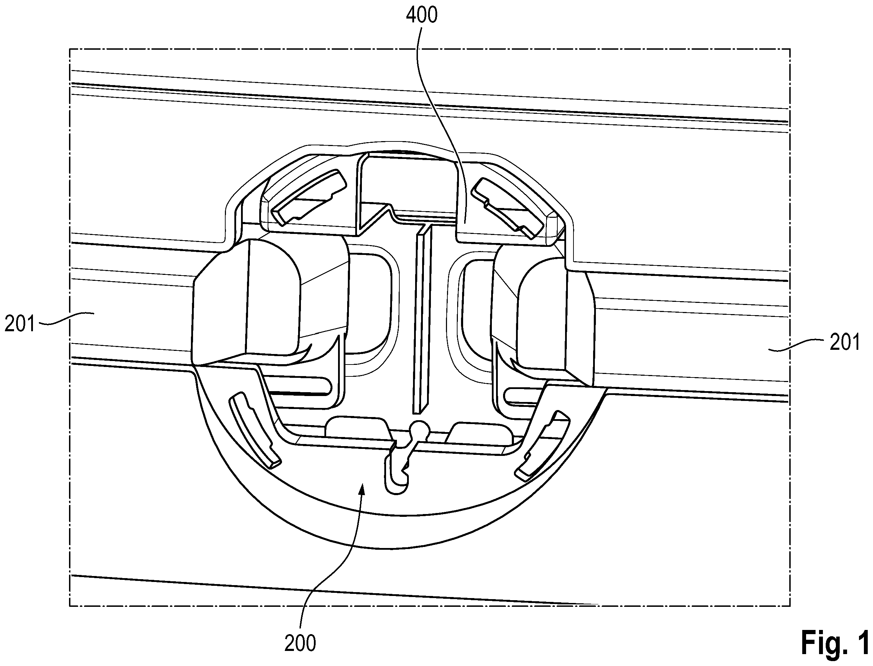

Figure 1 schematically depicts a front-end frame (400) of a vehicle. As can be appreciated in Figure 1, due to a previous extraction of the vehicle logo (100) (not shown in Figure 1), there is a hollow area (200) in the position of the front-end frame (400) of the vehicle where the vehicle logo (100) is normally placed. Thus, in the case shown in Figure 1, the hollow area (200) allows a lateral displacement of front light guides (201), which are placed in each lateral side of the vehicle logo (100) in order to allow the light guides (201) to be extracted and replaced, or to allow access to the areas behind the aforementioned removable parts.

It can therefore be appreciated that an extraction of the vehicle logo (100) may be necessary in order to gain access to other vehicle parts and/or allow other vehicle parts to be replaced, such as the front light guides (201).

The vehicle logo extraction system allows an easy assembly of said vehicle logo (100) to the front-end frame (400) and a secure disassembly of the same, as will be explained in more detail below.

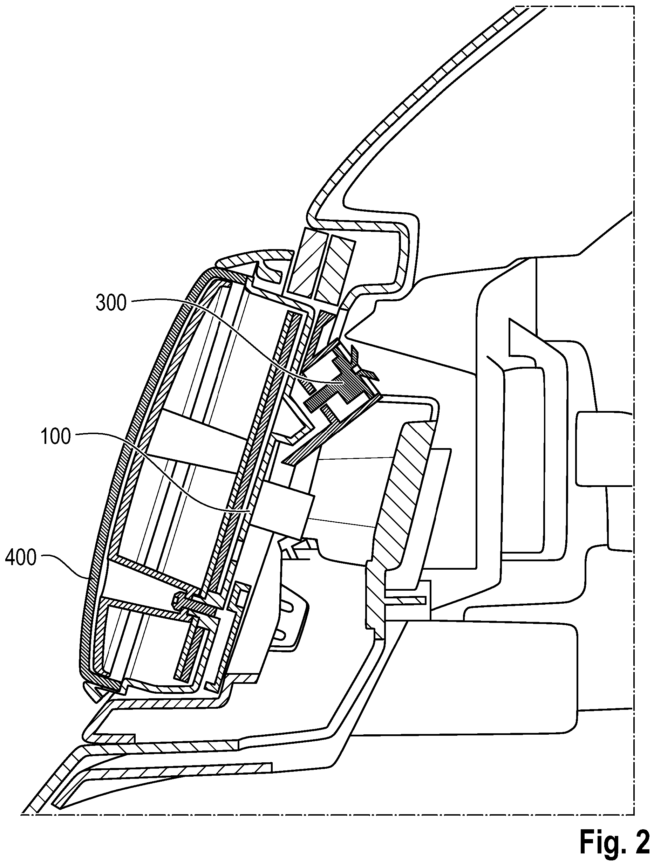

Figure 2 shows a lateral section view of a vehicle front-end frame (400), where a vehicle logo (100) is attached to the front-end frame (400) by means of the vehicle logo extraction system of the present invention.

The vehicle logo extraction system comprises a latch element (300), understood as a component which can be moved between different positions, acting as a blocking or fastening element for the displacement of other components in some of said positions, and allowing the displacement of said other components in other positions of the latch element (300).

With the aim to allow only voluntary disassemble of the vehicle logo (100), for example by an authorised operator, the latch element (300) can be accessed and operated by opening the vehicle bonnet and reaching the latch element (300) from the interior of the vehicle bonnet.

The vehicle logo extraction system of the present invention makes it possible to detach the vehicle logo (100) from the front-end frame (400) in an easy and secure operation.

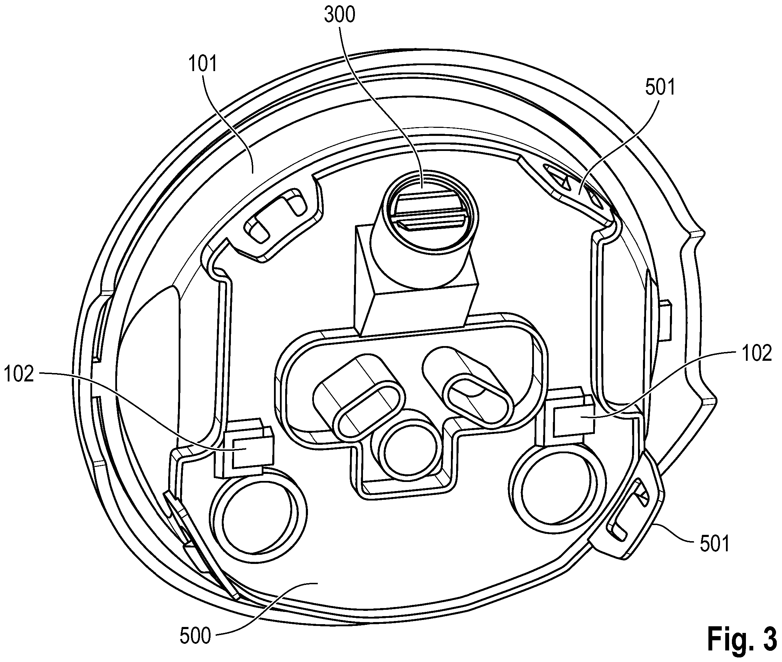

As can be seen in Figure 3, the vehicle logo (100) comprises a vehicle logo frame (101) and a support element (500). The vehicle logo frame (101) comprises the logo in its exterior surface, while is releasably coupled to the support element (500) in its interior surface, opposite to the exterior surface. The logo frame (101) can be detached from the support element (500) of the vehicle logo (100), which remains connected to the vehicle front-end frame (400) after the extraction of the logo frame (101). For this purpose, the support element (500) comprises non-detachable fixing means (501) configured to retain the support element (500) fixed to the front-end frame (400) of the vehicle. As can be seen in Figure 3, the support element (500) comprises four fixing means (501), such as clips, which can be attached to respective grooves of the support element (500), which can be seen in Figure 1.

In the assembly operation, the vehicle logo (100), meaning the logo frame (101) and the support element (500), can be mounted in the front end frame (400) by means of a mounting operation from the exterior of the vehicle, longitudinally displacing the vehicle logo (100) to the front-end frame (400) and coupling the fixing means (501) to the respective grooves of the front-end frame (400).

The logo frame (101) comprises at least one logo clamp (102) configured to be coupled to respective slots of the support element (500). Said logo clamps (102) allow that the logo frame (101) can be releasably disassembled from the support element (500). The uncoupling of the logo clamps (102) is only possible depending on the position of the latch element (300).

Thanks to the operation of the latch element (300), it is possible to uncouple the logo clamps (102) from the respective slots by applying a longitudinal displacement to the logo frame (101) (to the right direction according to Figure 3), disengaging the logo frame (101) from the support element (500) and thereby allowing the vehicle logo (100) to be extracted from the vehicle front-end frame (400).

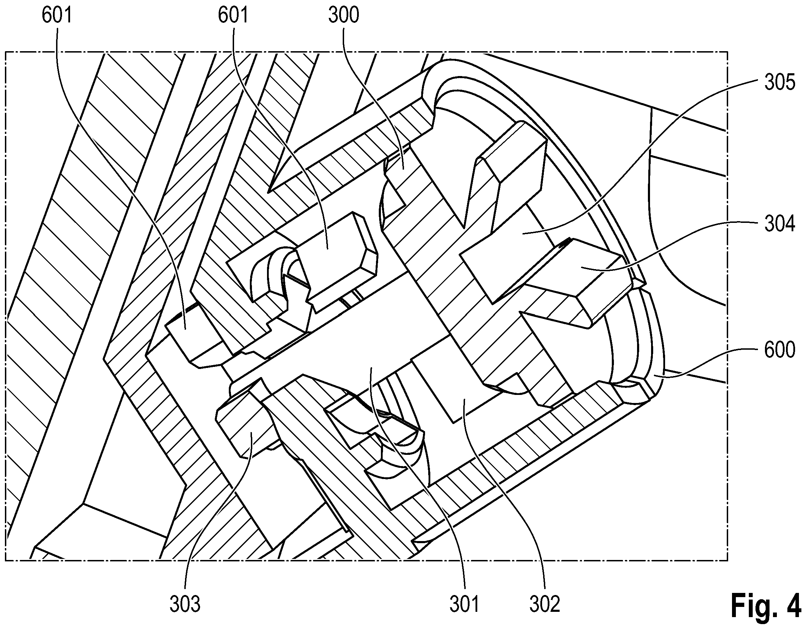

Figure 4 shows a section view of the latch element (300) where said latch element (300) can be more clearly appreciated.

The latch element (300) is comprised within a housing (600) of the support element (500) of the vehicle logo (100), being said housing (600) configured to limit the movement of the latch element (300). The housing has essentially a cylindrical geometry. In concrete, the housing (600) allows a rotation of the latch element (300) and a longitudinal displacement substantially parallel to the axis of revolution of the housing (600)

The latch element (300) comprises a latch shaft (301) with a lateral flange (302) projecting from the latch shaft (301).

The latch shaft (301) further comprises a latch block (303) positioned at one end of the latch shaft (301). The latch block (303) is configured to contact with abutment surfaces (601) of the housing, restricting the operation movement of the latch element (300), as will be explained in more detail below.

At the other end of the latch shaft (301), i.e. at the end of the latch shaft (301) opposite to the latch block (303), the latch element (300) comprises a key block (304) for allowing the latch element (300) to be operated from a locking position to an unlocking position and vice versa, for example by means of an operating tool.

The key block (304) comprises a funnel-shape geometry for guiding an operating tool (such as a screwdriver) until the operating tool abuts against a platform (305) of the latch element (300).

The housing (600) comprises a plurality of abutment surfaces (601) against which either the lateral flange (302) or the latch block (303) abuts, upon operation of the latch element (300).

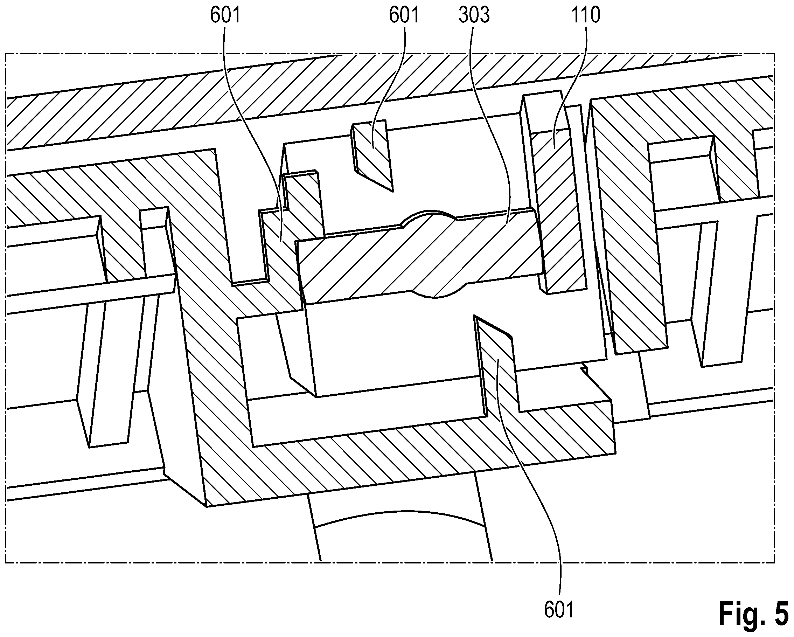

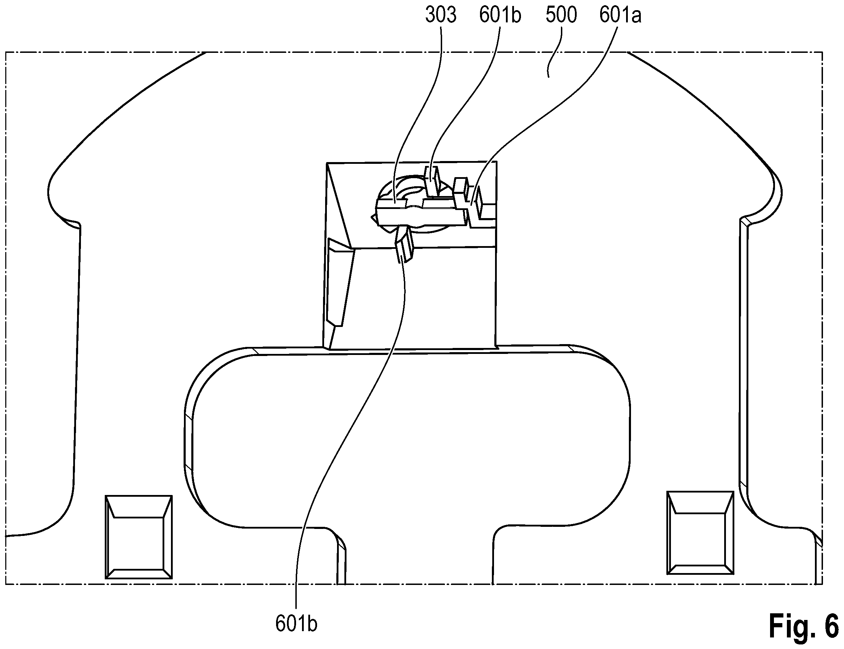

Figure 5 and Figure 6 show the abutment surfaces (601) of the housing (600).

As can be appreciated, the housing (600) comprises first abutment surfaces (601a) configured to restrict the direction of the rotation movement of the latch block (303) when operating the latch element (300) from the locking position up to the release position. According to the non-limiting example of the Figure 6, the first abutment surface (601a) allows a clockwise rotation of the latch block (303), being the latch element (300) in the locking position.

The housing (600) further comprises second abutment surfaces (601b) configured to restrict the rotation movement of the latch block (303) when operating the latch element (300) from the locking position up to an intermediate position.

Upon operation of the latch element (300), by rotating the latch element (300) by means of the operating tool (not shown in the Figures), the latch block (303) is stopped against the second abutment surfaces (601b). In order to continue the rotation of the latch element (300) by means of the operating tool, the latch element (300) must be pushed so as to exert a force greater than the elastic resistance of a spring element (700). Once the latch block (303) does not abut against the second abutment surfaces (601b), the latch block (303) can be further rotated, reaching the latch element (300) the release position.

The second abutment surfaces (601b) comprise a tilted surface configured to contact the latch block (303) and allow a sliding movement of the latch block (303) on said tilted surface. It makes easier to bring the latch element (300) from the intermediate position up to the release position, which requires a combined displacement of the latch element (300) consisting in a rotation movement and a longitudinal displacement.

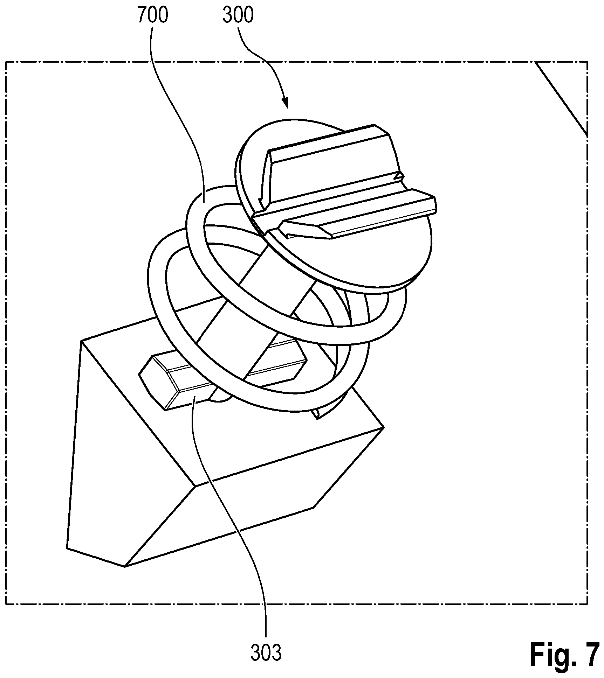

The spring element (700), as can be seen in Figure 7, Figure 8 and Figure 9, is positioned surrounding the latch shaft (301), and is comprised within the housing (600).

By pushing or pressing the key block (304), the latch block (303) is released from the second abutment surfaces (601b) and is therefore free to continue rotating upon further actuation of the latch element (300).

After having pushed the latch element (300) and having further rotated the latch element (300), the latch block (303) and the lateral flange (302) abut against the first abutment surfaces (601a), and the rotation of the latch element (300) ends.

In the position where the rotation of the latch element (300) has terminated, the latch block (303) does no longer impede that the logo frame (101) can be disengaged from the support element (500).

In order to disengage the logo frame (101) from the support element (500), and as can be seen in Figure 5, the logo frame (101) comprises a stop element (110) configured to contact the latch block (303) and limit the displacement of the logo frame (101) on the support element (500), being the latch element (300) in the locking position.

The stop element (110) is also configured to contact the latch block (303) and limit the displacement of the logo frame (101) on the support element (500), being the latch element (300) in any position between the locking position and the intermediate position.

Once the latch element (300) is in the release position, the stop element (110) does no longer impede that the logo frame (101) can be longitudinally displaced in relation to the support element (500). Said longitudinal displacement is used to uncouple the logo clamps (102) from the respective slots of the support element (500).

Figure 7 shows a first step in the extraction sequence of the logo (100), where the latch element (300) has not yet been operated or actuated.

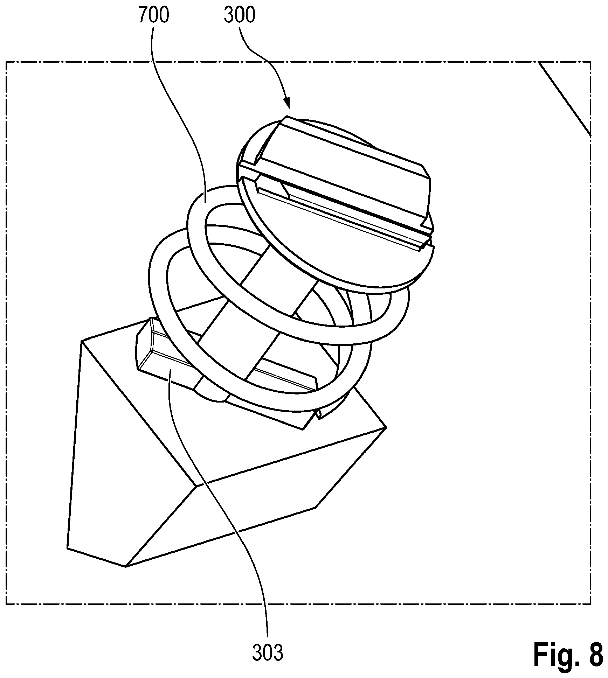

Figure 8 shows a second step in the extraction sequence of the logo (100), where the latch element (300) has been actuated up to a point where the latch block (303) abuts against the second abutment surfaces (601b).

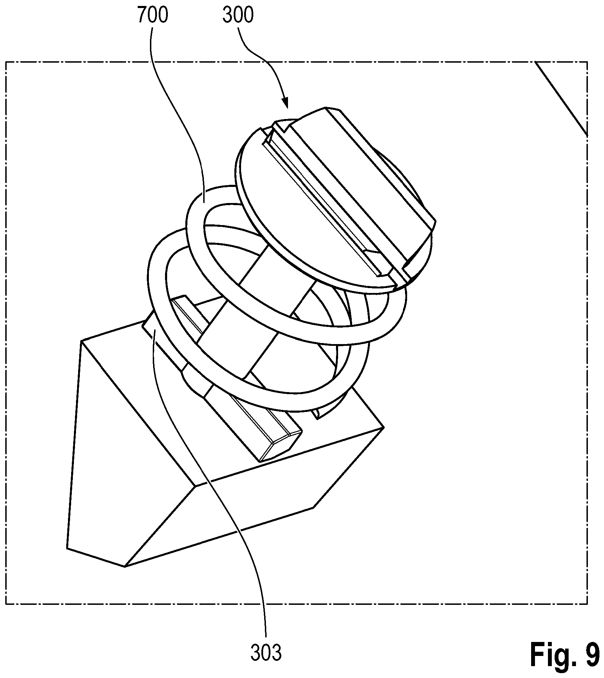

Figure 9 shows a third step in the extraction sequence of the logo (100), where the latch element (300) has further been actuated, pushing the spring element (700) and further rotating the latch element (300) up to a point in which the latch block (303) and the lateral flange (302) abut against the first abutment surfaces (601a).

The operation of the latch element (300) is therefore similar to a bayonet device operation, in which a combination of a rotation and a linear displacement are needed in order to operate the bayonet device.

## Claims

1. Vehicle logo extraction system **characterized in that** it comprises a vehicle logo (100) connectable to a front-end frame (400) of a vehicle and a latch element (300) configured to be operated between a locking position and a release position, wherein in the locking position the latch element (300) is configured to impede the extraction of the vehicle logo (100) from the front-end frame (400) of the vehicle by means of a latch block (304), and wherein in the release position, the latch element (300) is configured to allow the extraction of the vehicle logo (100) from the front-end frame (400) of the vehicle, wherein the latch element (300) comprises a key block (304) connected to the latch block (303), wherein the key block (304) is configured to be accessible only from an interior of the vehicle's bonnet and configured to be actuated for bringing the latch element (300) from the locking position to the release position.

2. Vehicle logo extraction system according to claim 1, **characterized in that** the key block (304) is configured to be actuated by means of an operating tool such as a screwdriver.

3. Vehicle logo extraction system according to claim 2, **characterized in that** the key block (304) comprises a funnel-shaped geometry configured to guide the insertion of the operating tool.

4. Vehicle logo extraction system according to any preceding claim, **characterized in that** the vehicle logo (100) comprises a logo frame (101) and a support element (500), wherein the support element (500) comprises fixing means (501) configured to retain the support element (500) fixed to the front-end frame (400) of the vehicle, and wherein the logo frame (101) comprises at least one logo clamp (102) configured to be releasably connected to the support element (500) such that, in the locking position of the latch element (300), the at least one logo clamp (102) impede the extraction of the logo frame (101) from the support element (500), and in the release position of the latch element (300), the at least one logo clamp (102) is configured to allow the extraction of the logo frame (101) from the support element (500) by means of a longitudinal displacement of the logo frame (101) on the support element (500).

5. Vehicle logo extraction system according to claim 4, **characterized in that** the longitudinal displacement of the logo frame (101) on the support element (500) which allow the extraction of the logo frame (101) from the support element (500) is substantially perpendicular to the extraction displacement of the logo frame (101) from the support element (500).

6. Vehicle logo extraction system according to claim 4 or 5, **characterized in that** the support element (500) comprises a housing (600) within which the latch element (300) is hosted, wherein the housing (600) comprises a plurality of abutment surfaces (601) configured to restrict the operation movement of the latch element (300), at least between the release position and the locking position.

7. Vehicle logo extraction system according to claim 6, **characterized in that** the latch element (300) is configured to rotate within the housing (600) for being operated between the locking position and the release position, wherein the housing (600) comprises first abutment surfaces (601a) configured to restrict the direction of the rotation movement of the latch block (303) when operating the latch element (300) from the locking position up to the release position.

8. Vehicle logo extraction system according to claim 6 or 7, **characterized in that** the housing (600) comprises second abutment surfaces (601b) configured to restrict the rotation movement of the latch block (303) when operating the latch element (300) from the locking position up to an intermediate position.

9. Vehicle logo extraction system according to claim 8, **characterized in that** it comprises a spring element (700) configured to cooperate with the latch element (300) and the housing (600), such that for bringing the latch element (300) from the intermediate position to the release position, the spring element (700) must be compressed by exerting a pressure upon the key block (304), such that the latch element (300) can be slidably displaced in relation to the housing (600) avoiding the latch block (303) the second abutment surfaces (601b), such that the latch element (300) can be further rotated up to the release position.

10. Vehicle logo extraction system according to any preceding claim, **characterized in that** the logo frame (101) comprises a stop element (110) configured to contact the latch block (303) and limit the displacement of the logo frame (101) on the support element (500), being the latch element (300) in the locking position.

11. Vehicle logo extraction system according to claim 10, **characterized in that** the stop element (110) is further configured to contact the latch block (303) and limit the displacement of the logo frame (101) on the support element (500), being the latch element (300) in any position between the locking position and the intermediate position.

12. Method for extracting a vehicle logo, wherein the method comprises utilizing the vehicle logo extraction system according to any preceding claim, **characterized in that** it comprises actuating the key block (304) for bringing the latch element (300) from the locking position to the release position.

13. Method for extracting a vehicle logo according to claim 12, **characterized in that** it comprises actuating the key block (304) by means of an operating tool such as a screwdriver.

14. Method for extracting a vehicle logo according to claim 12 or 13, **characterized in that** actuating the key block (304) comprises exerting a rotation movement upon the key block (304).

15. Method for extracting a vehicle logo according to any of claims 12 to 14, **characterized in that** comprise longitudinally displacing the logo frame (101) on the support element (500), being the at least one logo clamp (102) released from the support element (500).

16. Method for extracting a vehicle logo according to claim 14 or 15, **characterized in that** it comprises:
- rotating the key block (304) from the locking position of the latch element (300) up to an intermediate position of the latch element (300);
- exerting a pressure upon the key block (304);
- further rotating the key block (304), and;
- extracting the vehicle logo (100) from the front-end frame (400) of the vehicle.
